# EUROPÄISCHE PATENTSCHRIFT

(11) **EP 3 279 615 B1**
(45) Veröffentlichungstag und Bekanntmachung des Hinweises auf die Patenterteilung: **17.10.2018**
(21) Anmeldenummer: 16182284.6
(22) Anmeldetag: 02.08.2016
(51) Int. Cl.: G01D 5/347

(54) **LÄNGENMESSEINRICHTUNG**
LENGTH MEASURING DEVICE
DISPOSITIF DE MESURE DE LONGUEUR

(43) Veröffentlichungstag der Anmeldung: 07.02.2018
(73) Patentinhaber: Dr. Johannes Heidenhain GmbH, 83301 Traunreut (DE)
(72) Erfinder: MEYER, Hermann, 83458 Schneizlreuth (DE)

(56) Entgegenhaltungen:
- EP-A1- 0 247 353
- EP-A1- 2 325 610
- EP-A2- 0 169 189

## Beschreibung

### GEBIET DER TECHNIK

Die vorliegende Erfindung betrifft eine Längenmesseinrichtung zur Messung der Relativlage zweier Objekte mit einem Hohlprofil, in dessen Innenraum ein Maßband in Längsrichtung verlaufend gespannt ist, wobei an den Enden des Maßbandes jeweils ein Montageblock vorgesehen ist, an dem das Maßband befestigt ist und ein Mittel vorgesehen ist, um zumindest einen der Montageblöcke in einem ersten Montagezustand in Längsrichtung verschiebbar am Hohlprofil zu positionieren.

### STAND DER TECHNIK

Die ES 2 110 902 A1 und die EP 2 325 610 A1 offenbaren eine gattungsbildende Längenmesseinrichtung. Die Längenmesseinrichtung umfasst ein Hohlprofil, in dessen Innenraum ein Maßband in Längsrichtung verlaufend gespannt ist. An den Enden des Maßbandes ist jeweils ein Montageblock vorgesehen, an dem das Maßband befestigt ist. Die beiden Montageblöcke sind jeweils derart mittels Schrauben am Hohlprofil positioniert, dass sich diese in Längsrichtung relativ zum Hohlprofil verlagern können. Zur Positionsmessung wird das Maßband durch Anschrauben der Montageblöcke unmittelbar mit einem Maschinenteil verbunden, damit werden temperaturbedingte Längenänderungen des Maschinenteils dem Maßband aufgeprägt. Durch die in Längsrichtung entkoppelte Anordnung der Montageblöcke am Hohlprofil kann sich das Hohlprofil unabhängig vom Maßband temperaturbedingt ausdehnen und hat somit keinen negativen Einfluss auf die Messgenauigkeit der Längenmesseinrichtung.

Nachteilig bei dieser Konstruktion nach dem Stand der Technik ist, dass die Lage der Montageblöcke relativ zum Hohlprofil im Anlieferzustand vor dem Anbau an das Maschinenteil undefiniert ist.

### ZUSAMMENFASSUNG DER ERFINDUNG

Der vorliegenden Erfindung liegt die Aufgabe zugrunde, eine Längenmesseinrichtung anzugeben, die besser handhabbar ist und mit der eine verbesserte Positionsmessung ermöglicht wird.

Diese Aufgabe wird erfindungsgemäß durch die Längenmesseinrichtung mit den Merkmalen der unabhängigen Ansprüche 1, 3 und 4 gelöst.

Ansatzpunkt der Erfindung ist die Verbesserung der Positionierung eines Montageblocks gegenüber dem Hohlprofil.

Konkret betrifft die Erfindung eine Längenmesseinrichtung zur Messung der Relativlage zweier Objekte, die ein Hohlprofil umfasst, in dessen Innenraum ein Maßband in Längsrichtung verlaufend auf Soll-Länge gespannt ist. An den Enden des Maßbandes ist jeweils ein Montageblock vorgesehen, an dem das Maßband befestigt ist. Die beiden endseitigen Montageblöcke sind zum unmittelbaren Befestigen an ein Maschinenteil ausgebildet, so dass das Maßband in gespanntem Zustand mittels der Montageblöcke an dem Maschinenteil befestigt werden kann.

Die Längenmesseinrichtung umfasst weiterhin ein Stellmittel, um zumindest einen der Montageblöcke in einem ersten Montagezustand in Längsrichtung verschiebbar am Hohlprofil zu positionieren. Dieses Stellmittel ist am Hohlprofil beweglich und von einer ersten Position in eine zweite Position bringbar. Durch die erste Position des Stellmittels wird erreicht, dass sich der Montageblock in dem ersten Montagezustand befindet, in der dieser in Längsrichtung verschiebbar am Hohlprofil gelagert ist. Durch Bewegen des Stellmittels in die zweite Position ist der Montageblock in eine vorgegebene Sollposition relativ zum Hohlprofil überführbar. Diese Sollposition ist durch das Stellmittel vorgegeben.

Das Stellmittel ist derart ausgebildet, dass es eine Verschiebung des Montageblocks in die Sollposition ermöglicht. Diese Verschiebung kann durch eine Formschräge des Stellmittels erreicht werden, wobei die Verschiebung des Montageblocks durch Drehen des Stellmittels um eine Drehachse oder durch Verschieben entlang einer Achse erfolgen kann. Alternativ kann zur Überführung des Montageblocks von der ersten Montageposition in die zweite Montageposition ein schwenkbarer Hebel vorgesehen sein.

Die verschiebbare Lagerung des Montageblocks relativ zum Hohlprofil sollte im ersten Montagezustand zumindest einen Weg umfassen, der sich aus der Differenz der thermisch bedingten Längenänderung des Maschinenteils gegenüber dem Hohlprofil ergibt. Über diesen Weg hinaus kann die Verschiebbarkeit durch Anschläge begrenzt sein.

Die Erfindung ermöglicht es nun, einen Montageblock relativ zum Hohlprofil in einer definierten Sollposition zu halten, so dass der Montageblock in einer definierten Lage an ein Maschinenteil angebaut werden kann. Die Erfindung ermöglicht darüber hinaus diese Sollposition unabhängig vom Maschinenteil auf einfache Weise reproduzierbar einzustellen.

Das Stellmittel ist im ersten Montagezustand als auch im zweiten Montagezustand am Hohlprofil angeordnet.

Vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine perspektivische Ansicht der angebauten Längenmesseinrichtung nach dem ersten Ausführungsbeispiel;
- Figur 2: einen Querschnitt der Längenmesseinrichtung gemäß Figur 1;
- Figur 3: einen Querschnitt der Längenmesseinrichtung im nicht angebauten Zustand;
- Figur 4: eine perspektivische Ansicht der Längenmesseinrichtung ohne Montageblock;
- Figur 5: eine perspektivische Ansicht des Montageblocks;
- Figur 6: eine perspektivische Ansicht des Montageblocks mit einem Stellmittel gemäß dem ersten Ausführungsbeispiel;
- Figur 7: einen Schnitt der Längenmesseinrichtung gemäß Figur 3 im Bereich des Montageblocks;
- Figur 8: ein zweites Ausführungsbeispiel eines Stellmittels, und
- Figur 9: ein drittes Beispiel eines Stellmittels.

### BESCHREIBUNG DER AUSFÜHRUNGSFORMEN

Die Erfindung wird anhand mehrerer Ausführungsbeispiele erläutert. Die Ausführungsbeispiele unterscheiden sich nur in der Ausbildung des Stellmittels.

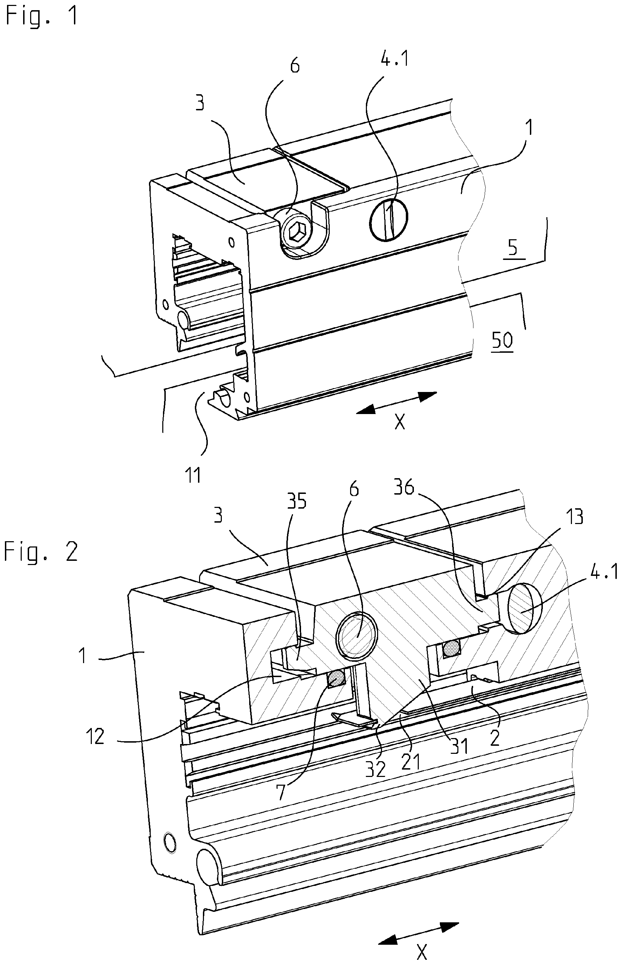

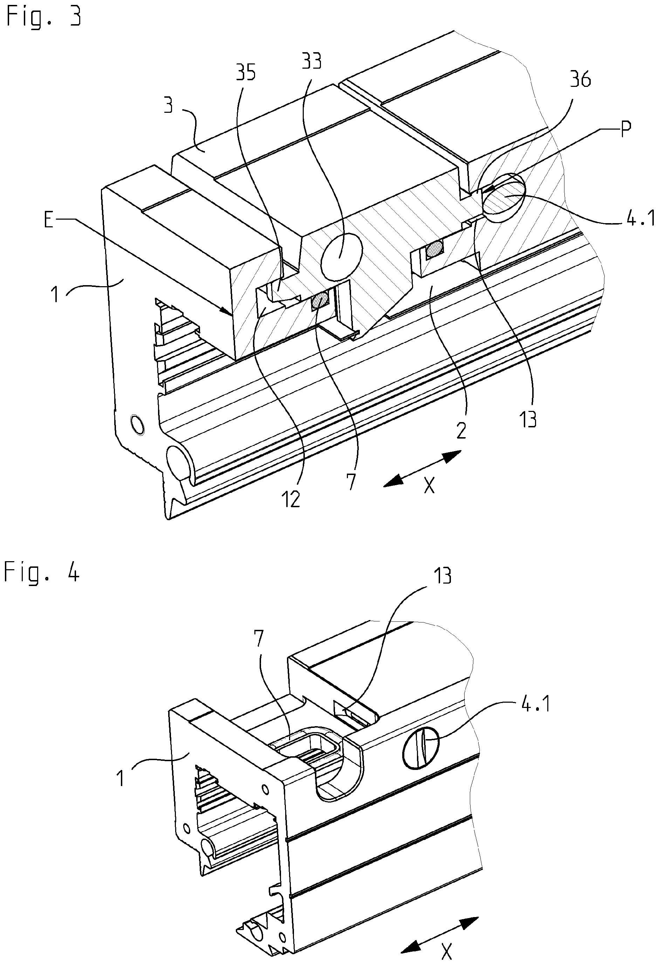

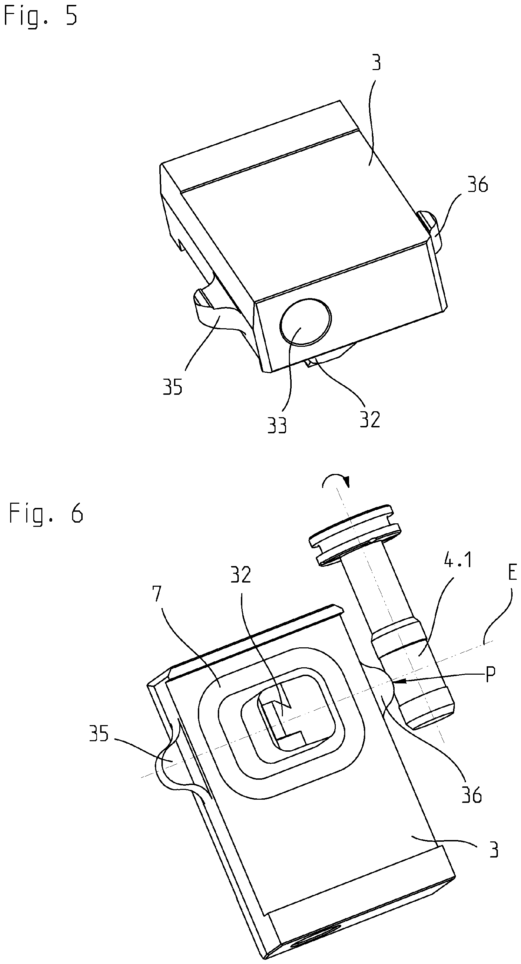

Anhand der Figur 1 bis 7 wird das erste Ausführungsbeispiel einer erfindungsgemäß ausgestalteten Längenmesseinrichtung erläutert. Dabei zeigen die Figuren 1 und 2 die Längenmesseinrichtung in dem ersten Montagezustand und die Figur 3 in dem zweiten Montagezustand.

Diese Längenmesseinrichtung umfasst ein Hohlprofil 1, das einen durch dachförmig angeordnete Dichtlippen abgedichteten Längsschlitz 11 aufweist. Bei der Positionsmessung ist im Inneren des Hohlprofils 1 eine Abtasteinheit angeordnet, die über einen durch die Dichtlippen und den Längsschlitz 11 hindurchgeführten Mitnehmer mit einem zu messenden Objekt 50 befestigt ist. Zur Positionsmessung wird der Mitnehmer der Abtasteinheit an ein erstes zu messende Objekt 50 angebaut und das Hohlprofil 1 an ein in Längsrichtung X dazu bewegliches zweites zu messende Objekt - nachfolgend Maschinenteil 5 genannt - angebaut. Die Längsrichtung X entspricht der Messrichtung. Aus Gründen der Übersichtlichkeit sind in den Figuren die Dichtlippen und die Abtasteinheit der Längenmesseinrichtung nicht dargestellt.

Bei Längenmesseinrichtungen werden Maßbänder 2 verwendet, deren Messteilung, um thermischen Längenänderungen entgegenzuwirken, bewusst verkürzt hergestellt wird. Zum Messbetrieb werden die Maßbänder 2 in Längsrichtung X auf Sollmaß gedehnt. Im Hohlprofil 1 ist eine Nut vorgesehen, in welcher das Maßband 2 in Richtungen quer zur Längsrichtung X formschlüssig aufgenommen ist, aber in Längsrichtung X vom Hohlkörper 1 derart entkoppelt ist, dass es sich unabhängig vom Hohlkörper 1 ausdehnen kann. Das Maßband 2 trägt auf seiner Oberseite, also zur Abtasteinheit weisend und dieser gegenüberliegend, eine Messteilung. Diese Messteilung wird im Messbetrieb von der Abtasteinheit abgetastet, vorzugsweise lichtelektrisch, dabei werden von der Abtasteinheit positionsabhängige Abtastsignale generiert. Die Messteilung kann alternativ magnetisch, induktiv oder kapazitiv abtastbar ausgestaltet sein, wobei es sich um eine inkrementale oder absolute Messteilung handeln kann.

Das Maßband 2 wird zur Positionsmessung im Innenraum entlang des Hohlkörpers 1 gespannt gehalten, indem es an den beiden Enden jeweils über einen Montageblock 3 unmittelbar am Maschinenteil 5 fixiert ist. Die Erfindung wird anhand des linksseitigen Montageblocks 3 der dargestellten Längenmesseinrichtung weiter erläutert. Der nicht dargestellte Montageblock am anderen - hier rechtsseitigen - Ende der Längenmesseinrichtung kann in gleicher Weise wie der nachfolgend noch näher erläuterte Montageblock 3 ausgebildet sein. Alternativ oder zusätzlich kann am anderen Ende (hier rechtsseitig der Längenmesseinrichtung) eine Spannvorrichtung vorgesehen sein. Mit dieser Spannvorrichtung kann der gewünschte Spannungszustand des Maßbandes 2 eingestellt werden. Hierzu kann diese Spannvorrichtung eine Feder aufweisen, deren Spannkraft einstellbar ist. Derartige Spannvorrichtungen sind dem Fachmann hinlänglich bekannt, weshalb sich eine nähere Erläuterung hierzu erübrigt.

Das Maßband 2 ist an einem Mitnehmer 31 des Montageblocks 3 befestigt. Die Befestigung kann durch Schrauben erfolgen, vorzugsweise aber durch Einhaken eines Hakens 32 des Mitnehmers 31 in eine Ausnehmung 21 des Maßbandes 2.

Gemäß der Erfindung kann der Montageblock 3 zwei unterschiedliche Montagezustände relativ zum Hohlprofil 1 einnehmen. Im ersten Montagezustand ist der Montageblock 3 in Längsrichtung X verschiebbar am Hohlprofil 1 positioniert. In diesem ersten Montagezustand ist die Längenmesseinrichtung zur Positionsmessung am Maschinenteil 5 befestigt, indem die beiden endseitigen Montageblöcke 3 an dem Maschinenteil 5 angeschraubt sind und das Maßband 2 im eingestellten Spannungszustand halten. Am Montageblock 3 ist hierzu eine quer zur Längsrichtung X verlaufende Bohrung 33 vorgesehen, mit der der Montageblock 3 über eine Schraube 6 am Maschinenteil 5 ortsfest fixiert ist. Dieser angebaute Zustand der Längenmesseinrichtung ist in den Figuren 1 und 2 dargestellt.

Besonders vorteilhaft ist es, wenn das Maßband 2 und die Montageblöcke 3 gleiches Temperaturverhalten aufweisen, vorzugsweise bestehen diese aus identischem Material, insbesondere aus dem gleichen Material, aus dem das Maschinenteil 5 besteht, an das der Anbau erfolgt. In den meisten Fällen besteht das Maschinenteil 5 aus Stahl, dann sollte auch der Montageblock 3 aus Stahl bestehen und das Maßband 2 ein Stahlband sein.

Aufgrund von Temperaturänderungen hervorgerufene Längenänderungen des Maschinenteils 5 werden direkt auf das Maßband 2 übertragen. Durch die in Längsrichtung X realisierte Entkopplung der Montageblöcke 3 vom Hohlkörper 1 werden keine Zwangskräfte vom Hohlkörper 1 - der in der Regel aus Aluminium besteht - auf das Maßband 2 übertragen.

Die verschiebbare Lagerung des Montageblocks 3 relativ zum Hohlprofil 1 sollte im ersten Montagezustand zumindest eine Wegstrecke umfassen, die sich aus der Differenz der thermisch bedingten Längenänderung des Maschinenteils 5 gegenüber dem Hohlprofil 1 ergibt. Über diese Wegstrecke hinaus kann die Verschiebbarkeit des Montageblocks 3 durch Anschläge begrenzt sein.

Im zweiten Montagezustand wird der Montageblock 3 relativ zum Hohlprofil 1 in einer Sollposition gehalten. In diesem zweiten Montagezustand wird die Längenmesseinrichtung vom Hersteller ausgeliefert und vom Anwender an das Maschinenteil 5 angebaut. Dabei befindet sich das Maßband 2 in einem zur präzisen Positionsmessung optimierten Spannungszustand. Dieser zweite Montagezustand ist in Figur 3 dargestellt.

Um den Montageblock 3 in der Sollposition zu halten, ist ein am Hohlprofil 1 beweglich gelagertes Stellmittel vorgesehen, das von einer ersten Position in eine zweite Position bringbar ist. In der ersten Position des Stellmittels befindet sich der Montageblock 3 in dem ersten Montagezustand. Durch Bewegen des Stellmittels in die zweite Position wird der Montageblock 3 in die Sollposition gebracht und in dieser Sollposition in Längsrichtung X relativ zum Hohlprofil 1 gehalten. Diese Sollposition ist durch das Stellmittel vorgegeben.

Bei dem ersten Ausführungsbeispiel ist das Stellmittel ein im Hohlprofil drehbar gelagerter Körper 4.1, dessen Oberfläche derart ausgebildet ist, dass der Montageblock 3 in einer ersten Drehlage des Körpers 4.1 im ersten Montagezustand positioniert ist. Der Montageblock 3 ist in einer zweiten Drehlage des Körpers 4.1 im zweiten Montagezustand positioniert, indem der Montageblock 3 mittels des Körpers 4.1 in der Sollposition am Hohlprofil 1 festgelegt ist. Die erste Drehlage des Körpers 4.1 ist in der Figur 2 dargestellt und die zweite Drehlage des Körpers 4.1 ist in Figur 3 dargestellt.

Der drehbare Körper 4.1 weist eine exzentrische Oberfläche auf, mit der der Montageblock 3 durch Drehen des Körpers 4.1 um seine Längsachse von dem ersten Montagezustand in den zweiten Montagezustand überführbar ist. Die Erfindung ermöglicht damit eine reproduzierbare und wiederholbare Positionierung des Montageblocks 3 von dem ersten Montagezustand in den zweiten Montagezustand und umgekehrt vom zweiten Montagezustand wieder in den ersten Montagezustand zurück. Im dargestellten Ausführungsbeispiel wirkt im zweiten Montagezustand ein Oberflächenbereich des Körpers 4.1 mit einem Anschlag des Montageblocks 3 zusammen. In diesem Zustand kann die Längenmesseinrichtung vom Maschinenteil 5 abgebaut werden, ohne dass sich der eingestellte Spannungszustand des Maßbandes 2 verändert. Der Montageblock 3 wird aufgrund des gespannten Maßbandes 2 an den Körper 4.1 gedrängt und damit in der Sollposition gehalten. Dabei kontaktiert der Körper 4.1 den Montageblock 3 im zweiten Montagezustand an einer Position P, die mit dem resultierenden Kraft-Angriffspunkt des Maßbandes 2 am Montageblock 3 gemeinsam in einer Ebene E liegt, die in Längsrichtung X ausgerichtet ist. Damit wird erreicht, dass die durch die Maßbandspannung auf den Montageblock 3 eingeleitete Kraft vom Körper 4.1 derart abgestützt wird, dass keine Querkräfte und Drehmomente auf den Montageblock 3 ausgeübt werden. Die Ebene E ist vorzugsweise senkrecht und mittig zur Maßbandoberfläche aufgespannt.

Durch Verdrehen des Körpers 4.1 um seine Längsachse kann der Oberflächenbereich des Körpers 4.1 vom Anschlag des Montageblocks 3 wieder weggedreht werden, so dass keine Oberfläche des Körpers 4.1 die erforderliche Beweglichkeit des Montageblocks 3 relativ zum Hohlprofil 1 behindert. Durch die exzentrische Oberfläche des Körpers 4.1 ist gewährleistet, dass der Montageblock 3 wiederholbar sehr präzise mit einer Genauigkeit im µ-Bereich in die Sollposition überführbar ist.

Die in Figur 3 dargestellte Drehlage des Körpers 4.1 - also der zweite Montagezustand der Längenmesseinrichtung - kann durch eine Rastung vorgegeben sein. Hierzu ist im Körper 4.1 beispielsweise eine Nut eingebracht, in die in der Drehlage des Körpers 4.1, in der sich der Montageblock 3 in der Sollposition am Hohlprofil 1 befindet, eine federvorgespannte Kugel eingreift. Alternativ kann die Drehlage durch einen die Drehung begrenzenden Anschlag ausgebildet sein.

Der Montageblock 3 weist Führungsflächen auf, die in Hinterschneidungen 12, 13 des Hohlprofils 1 eingreifen und den Montageblock 3 in Längsrichtung X darin verschiebbar positionieren. Diese Hinterschneidungen 12, 13 sind in Form von in Längsrichtung X verlaufende Führungsnuten in dem Hohlprofil 1 vorgesehen.

Die Führungsflächen sind an in Längsrichtung X voneinander beabstandeten und in Längsrichtung X weisenden Vorsprüngen 35, 36 ausgebildet. Jeder der beiden Vorsprünge 35, 36 greift in eine der Hinterschneidungen 12, 13 des Hohlprofils 1 ein. Die Hinterschneidungen 12, 13 bilden einen Umgriff für die Vorsprünge 35, 36 und sichern den Montageblock 3 in einer Richtung, die senkrecht zur Längsrichtung X und senkrecht zur Maßbandoberfläche verläuft. Die Vorsprünge 35, 36 bilden eine Art Führungszapfen, die in den Führungsnuten des Hohlprofils 1 angeordnet sind und den Montageblock 3 darin verliersicher halten und in Längsrichtung X führen.

Der Schwerpunkt der Führungsflächen an den Vorsprüngen 35, 36 ist vorzugsweise ebenfalls in der Ebene E angeordnet. Dadurch ist gewährleistet, dass die durch die Maßbandspannung auf den Montageblock 3 eingeleitete Kraft von den den Führungsflächen der Vorsprünge 35, 36 gegenüberliegenden Gegenflächen des Hohlprofils 1 aufgenommen wird, ohne dass Querkräfte und damit Drehmomente senkrecht zur Maßbandebene ausgeübt werden. Dadurch ist sichergestellt, dass sich der Montageblock 3 nicht verdreht und die Messgenauigkeit nicht verschlechtern kann. In der Figur 3 ist die Ebene E die Schnittebene.

Zwischen den beiden Vorsprüngen 35, 36 des Montageblocks 3 (in Längsrichtung X betrachtet) ist der Mitnehmer 31 angeordnet, der durch einen Durchbruch in den Innenraum des Hohlprofils 1 ragt. Dieser Durchbruch ist mittels einer elastischen Dichtung 7 in Form eines Dichtringes abgedichtet, der zwischen dem Montageblock 3 und dem Hohlprofil 1 angeordnet ist. Der Dichtring umgibt den Durchbruch. Die elastische Dichtung 7 übt auf den Montageblock eine Kraft aus, welche die Vorsprünge 35, 36 und somit die Führungsflächen an Gegenflächen der Hinterschneidungen 12, 13 des Hohlprofils 1 drängen.

Besonders vorteilhaft ist nun, wenn der Kontakt P der Anschlagfläche des Stellmittels - hier der Körper 4.1 - mit dem Montageblock 3 sowie das Zentrum des Verlaufs der Dichtung 7 sowie der resultierende Kraft-Angriffspunkt der Befestigung des Maßbandes 2 am Mitnehmer 31 und der Schwerpunkt der in Längsrichtung X voneinander beabstandeten Führungsflächen des Montageblocks 3 in der gemeinsamen Ebene E angeordnet sind. Diese Ebene E ist in Längsrichtung X ausgerichtet und vorzugsweise auch senkrecht und mittig zur Maßbandoberfläche ausgerichtet.

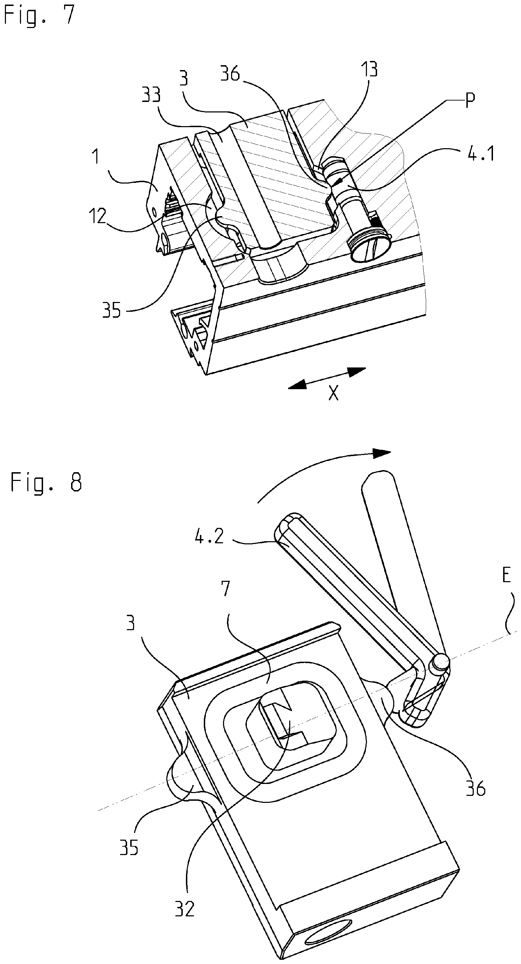

Ein zweites Ausführungsbeispiel wird anhand der Figur 8 näher erläutert. Das Stellmittel ist in diesem Fall ein im Hohlprofil 1 schwenkbarer Hebel 4.2. Durch Verschwenken des Hebels 4.2 ist ein Anschlag des Hebels 4.2 mit einem Anschlag des Montageblocks 3 in Kontakt bringbar und der Montageblock 3 damit in den zweiten Montagezustand überführbar, in der der Montageblock in der Sollposition gegenüber dem Hohlprofil 1 festgelegt ist.

Durch die Hebelwirkung des Hebels 4.2 ist gewährleistet, dass der Montageblock 3 problemlos exakt in die Sollposition überführbar ist.

Auch hier kann die Drehlage des Hebels 4.2, welche den zweiten Montagezustand der Längenmesseinrichtung definiert, durch eine Rastung vorgegeben sein, beispielsweise durch eine am Hebel 4.2 eingebrachte Nut, die in der Drehlage des Hebels 4.2, in der sich der Montageblock 3 in der Sollposition am Hohlprofil 1 befindet, eine federvorgespannte Kugel eingreift. Alternativ kann die Drehlage auch durch einen die Drehung begrenzenden Anschlag ausgebildet sein.

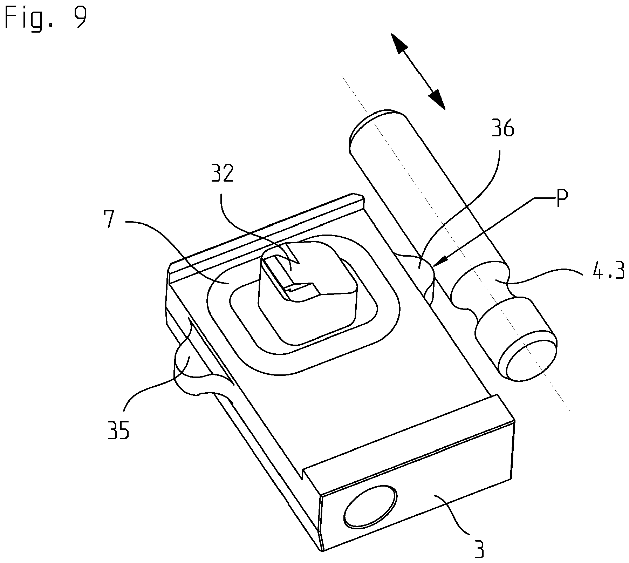

Ein drittes Ausführungsbeispiel wird anhand der Figur 9 näher erläutert. Das Stellmittel ist in diesem Fall ein im Hohlprofil 1 verschiebbares Element 4.3 mit einer Formschräge, die derart ausgebildet ist, dass der Montageblock 3 in einer ersten Position dieses Elementes 4.3 im ersten Montagezustand positioniert ist und der Montageblock 3 in einer zweiten Position dieses Elementes 4.3 im zweiten Montagezustand positioniert ist. In der zweiten Montageposition ist der Montageblock 3 mittels einer Oberfläche dieses Elementes 4.3 in der Sollposition festgelegt. Durch die Formschräge ist gewährleistet, dass der Montageblock 3 problemlos exakt in die Sollposition überführbar ist. Die Formschräge ist eine zur Verschieberichtung des Elementes 4.3 geneigte Fläche.

Bei allen Ausführungsformen der Erfindung ist eine einfache Möglichkeit geschaffen, den Montageblock 3 relativ zum Hohlprofil 1 in eine definierte Sollposition zu überführen und dort zu halten, so dass der Montageblock 3 in einer definierten Lage an das Maschinenteil 5 angebaut werden kann. Die Erfindung ermöglicht darüber hinaus diese Sollposition unabhängig vom Maschinenteil 5 auf einfache Weise reproduzierbar einzustellen. Durch Bewegen des im Hohlprofil 1 gelagerten Stellmittels 4.1, 4.2, 4.3 kann auf einfache Weise die Sollposition des Montageblocks 3 reproduzierbar eingestellt werden. Dabei ist das Stellmittel 4.1, 4.2, 4.3 sowohl im ersten Montagezustand als auch im zweiten Montagezustand am Hohlprofil 1 angeordnet.

Die Erfindung ist auch bei Längenmesseinrichtungen vorteilhaft einsetzbar, bei denen der Hohlkörper 1 aus mehreren aneinander gestoßenen Teilstücken besteht. In diesem Fall ist das Maßband 2 über diese mehrere Teilstücke hinweg gespannt.

## Patentansprüche

1. Längenmesseinrichtung zur Messung der Relativlage zweier Objekte (5, 50) mit einem Hohlprofil (1), in dessen Innenraum ein Maßband (2) in Längsrichtung (X) verlaufend gespannt ist, wobei
an den Enden des Maßbandes (2) jeweils ein Montageblock (3) vorgesehen ist, an dem das Maßband (2) befestigt ist und
ein Mittel vorgesehen ist, um zumindest einen der Montageblöcke (3) in einem ersten Montagezustand in Längsrichtung (X) verschiebbar am Hohlprofil (1) zu positionieren,
**dadurch gekennzeichnet, dass**
das Mittel ein am Hohlprofil (1) beweglich gelagertes Stellmittel (4.1, 4.2, 4.3) ist, das von einer ersten Position in eine zweite Position bringbar ist, wobei sich der Montageblock (3) in der ersten Position des Stellmittels (4.1, 4.2, 4.3) in dem ersten Montagezustand befindet und der Montageblock (3) durch Bewegen des Stellmittels (4.1, 4.2, 4.3) in die zweite Position in einen zweiten Montagezustand überführbar ist, bei dem der Montageblock (3) in einer vom Stellmittel (4.1, 4.2, 4.3) vorgegebenen Sollposition am Hohlprofil (1) festgelegt ist, wobei
das Stellmittel (4.1) ein im Hohlprofil (1) drehbar gelagerter Körper ist, dessen Oberfläche derart ausgebildet ist, dass der Montageblock (3) in einer ersten Drehlage dieses Körpers im ersten Montagezustand positioniert ist und der Montageblock (3) in einer zweiten Drehlage dieses Körpers im zweiten Montagezustand positioniert ist, indem der Montageblock (3) mittels einer Oberfläche dieses Körpers in der Sollposition festgelegt ist.

2. Längenmesseinrichtung nach Anspruch 1, wobei der drehbare Körper eine exzentrische Oberfläche aufweist, mit der der Montageblock (3) durch Drehen des Körpers von dem ersten Montagezustand in den zweiten Montagezustand überführbar ist.

3. Längenmesseinrichtung zur Messung der Relativlage zweier Objekte (5, 50) mit einem Hohlprofil (1), in dessen Innenraum ein Maßband (2) in Längsrichtung (X) verlaufend gespannt ist, wobei
an den Enden des Maßbandes (2) jeweils ein Montageblock (3) vorgesehen ist, an dem das Maßband (2) befestigt ist und
ein Mittel vorgesehen ist, um zumindest einen der Montageblöcke (3) in einem ersten Montagezustand in Längsrichtung (X) verschiebbar am Hohlprofil (1) zu positionieren,
**dadurch gekennzeichnet, dass**
das Mittel ein am Hohlprofil (1) beweglich gelagertes Stellmittel (4.1, 4,2, 4.3) ist, das von einer ersten Position in eine zweite Position bringbar ist, wobei sich der Montageblock (3) in der ersten Position des Stellmittels (4.1, 4.2, 4.3) in dem ersten Montagezustand befindet und der Montageblock (3) durch Bewegen des Stellmittels (4.1, 4.2, 4.3) in die zweite Position in einen zweiten Montagezustand überführbar ist, bei dem der Montageblock (3) in einer vom Stellmittel (4.1, 4.2, 4.3) vorgegebenen Sollposition am Hohlprofil (1) festgelegt ist, wobei
das Stellmittel (4.2) ein im Hohlprofil (1) schwenkbarer Hebel ist, und wobei durch Verschwenken des Hebels ein Anschlag des Hebels mit einem Anschlag des Montageblocks (3) in Kontakt bringbar ist und der Montageblock (3) in den zweiten Montagezustand überführbar ist.

4. Längenmesseinrichtung zur Messung der Relativlage zweier Objekte (5, 50) mit einem Hohlprofil (1), in dessen Innenraum ein Maßband (2) in Längsrichtung (X) verlaufend gespannt ist, wobei an den Enden des Maßbandes (2) jeweils ein Montageblock (3) vorgesehen ist, an dem das Maßband (2) befestigt ist und
ein Mittel vorgesehen ist, um zumindest einen der Montageblöcke (3) in einem ersten Montagezustand in Längsrichtung (X) verschiebbar am Hohlprofil (1) zu positionieren,
**dadurch gekennzeichnet, dass**
das Mittel ein am Hohlprofil (1) beweglich gelagertes Stellmittel (4.1, 4.2, 4.3) ist, das von einer ersten Position in eine zweite Position bringbar ist, wobei sich der Montageblock (3) in der ersten Position des Stellmittels (4.1, 4.2, 4.3) in dem ersten Montagezustand befindet und der Montageblock (3) durch Bewegen des Stellmittels (4.1, 4.2, 4.3) in die zweite Position in einen zweiten Montagezustand überführbar ist, bei dem der Montageblock (3) in einer vom Stellmittel (4.1, 4.2, 4.3) vorgegebenen Sollposition am Hohlprofil (1) festgelegt ist, wobei
das Stellmittel (4.3) ein im Hohlprofil (1) verschiebbares Element mit einer Formschräge ist, die derart ausgebildet ist, dass der Montageblock (3) in einer ersten Position dieses Elementes im ersten Montagezustand positioniert ist und der Montageblock (3) in einer zweiten Position dieses Elementes im zweiten Montagezustand positioniert ist, indem der Montageblock (3) mittels der Formschräge in den zweiten Montagezustand überführbar ist.

5. Längenmesseinrichtung nach einem der vorhergehenden Ansprüche, wobei der resultierende Kraft-Angriffspunkt des Maßbandes (2) am Montageblock (3) sowie der Kontaktpunkt (P), an dem das Stellmittel (4.1, 4.2, 4.3) den Montageblock (3) im zweiten Montagezustand kontaktiert in einer Ebene (E) liegen, die in Längsrichtung (X) ausgerichtet ist.

6. Längenmesseinrichtung nach einem der vorhergehenden Ansprüche, wobei der Montageblock (3) Führungsflächen aufweist, die in Hinterschneidungen (12, 13) des Hohlprofils (1) eingreifen und den Montageblock (3) darin in Längsrichtung (X) verschiebbar positionieren.

7. Längenmesseinrichtung nach Anspruch 6, wobei die Führungsflächen an in Längsrichtung (X) voneinander beabstandeten und in Längsrichtung (X) weisenden Vorsprüngen (35, 36) ausgebildet sind, von denen jeder in eine der Hinterschneidungen (12, 13) des Hohlprofils (1) eingreift.

8. Längenmesseinrichtung nach Anspruch 5 und einem der Ansprüche 6 oder 7, wobei der Schwerpunkt der Führungsflächen in der Ebene (E) liegt.

9. Längenmesseinrichtung nach einem der Ansprüche 6 bis 8, wobei zwischen dem Hohlprofil (1) und dem Montageblock (3) eine elastische Dichtung (7) angeordnet ist, die einen Durchbruch des Hohlprofils (1) abdichtet, durch den ein Mitnehmer (31) des Montageblocks (3) ragt, an dem das Maßband (2) befestigt ist, und wobei die Dichtung (7) den Durchbruch umgibt und auf den Montageblock (3) eine Kraft ausübt welche die Führungsflächen an Gegenflächen der Hinterschneidungen (12, 13) drängen.

## Claims

1. Length measuring device for measuring the relative position of two objects (5, 50), having a hollow profile (1), in the interior of which a measuring tape (2) extending in the longitudinal direction (X) is tensioned,
a mounting block (3) to which the measuring tape (2) is fixed being provided in each case at the ends of the measuring tape (2), and
a means being provided in order to position at least one of the mounting blocks (3) so as to be displaceable in the longitudinal direction (X) on the hollow profile (1) in a first mounting state, **characterized in that**
the means is an adjuster (4.1, 4.2, 4.3) mounted movably on the hollow profile (1), which can be moved from a first position to a second position, wherein the mounting block (3) is in the first mounting state in the first position of the adjuster (4.1, 4.2, 4.3), and, by moving the adjuster (4.1, 4.2, 4.3) into the second position, the mounting block (3) can be transferred to a second mounting state, in which the mounting block (3) is fixed to the hollow profile (1) in a target position predefined by the adjuster (4.1, 4.2, 4.3), wherein the adjuster (4.1) is a body that is rotatably mounted in the hollow profile (1) and the surface of which is formed in such a way that, in a first rotational position of this body, the mounting block (3) is positioned in the first mounting state and, in a second rotational position of this body, the mounting block (3) is positioned in the second mounting state **in that** the mounting block (3) is fixed in the target position by means of a surface of this body.

2. Length measuring device according to Claim 1, wherein the rotatable body has an eccentric surface, with which the mounting block (3) can be transferred from the first mounting state into the second mounting state by rotating the body.

3. Length measuring device for measuring the relative position of two objects (5, 50), having a hollow profile (1), in the interior of which a measuring tape (2) extending in the longitudinal direction (X) is tensioned,
a mounting block (3), to which the measuring tape (2) is fixed being provided in each case at the ends of the measuring tape (2), and
a means being provided in order to position at least one of the mounting blocks (3) so as to be displaceable in the longitudinal direction (X) on the hollow profile (1) in a first mounting state, **characterized in that**
the means is an adjuster (4.1, 4.2, 4.3) mounted movably on the hollow profile (1), which can be moved from a first position to a second position, wherein the mounting block (3) is in the first mounting state in the first position of the adjuster (4.1, 4.2, 4.3), and, by moving the adjuster (4.1, 4.2, 4.3) into the second position, the mounting block (3) can be transferred to a second mounting state, in which the mounting block (3) is fixed to the hollow profile (1) in a target position predefined by the adjuster (4.1, 4.2, 4.3), wherein the adjuster (4.2) is a lever that can be pivoted in the hollow profile (1) and wherein, by pivoting the lever, a stop on the lever can be brought into contact with a stop on the mounting block (3) and the mounting block (3) can be transferred into the second mounting state.

4. Length measuring device for measuring the relative position of two objects (5, 50), having a hollow profile (1), in the interior of which a measuring tape (2) extending in the longitudinal direction (X) is tensioned,
a mounting block (3), to which the measuring tape (2) is fixed being provided in each case at the ends of the measuring tape (2), and
a means being provided in order to position at least one of the mounting blocks (3) so as to be displaceable in the longitudinal direction (X) on the hollow profile (1) in a first mounting state,
**characterized in that**
the means is an adjuster (4.1, 4.2, 4.3) mounted movably on the hollow profile (1), which can be moved from a first position to a second position, wherein the mounting block (3) is in the first mounting state in the first position of the adjuster(4.1, 4.2, 4.3), and, by moving the adjuster (4.1, 4.2, 4.3) into the second position, the mounting block (3) can be transferred to a second mounting state, in which the mounting block (3) is fixed to the hollow profile (1) in a target position predefined by the adjuster (4.1, 4.2, 4.3), wherein the adjuster (4.3) is an element that can be displaced in the hollow profile (1) and has a ramp which is formed in such a way that, in a first position of this element, the mounting block (3) is positioned in the first mounting state, and, in a second position of this element, the mounting block (3) is positioned in the second mounting state, **in that** the mounting block (3) can be transferred into the second mounting state by means of the ramp.

5. Length measuring device according to one of the preceding claims, wherein the resultant force action point of the measuring tape (2) on the mounting block (3) and also the contact point (P) at which the adjuster (4.1, 4.2, 4.3) contacts the mounting block (3) in the second mounting state lie in a plane (E) which is oriented in the longitudinal direction (X).

6. Length measuring device according to one of the preceding claims, wherein the mounting block (3) has guide surfaces which engage in undercuts (12, 13) in the hollow profile (1) and position the mounting block (3) such that it is displaceable in the longitudinal direction (X) therein.

7. Length measuring device according to Claim 6, wherein the guide surfaces are formed on projections (35, 36) which are spaced apart from each other in the longitudinal direction (X) and point in the longitudinal direction (X), and each of which engages in one of the undercuts (12, 13) in the hollow profile (1).

8. Length measuring device according to Claim 5 and either of Claims 6 and 7, wherein the centre of gravity of the guide surfaces lies in the plane (E) .

9. Length measuring device according to one of Claims 6 to 8, wherein, between the hollow profile (1) and the mounting block (3) there is arranged an elastic seal (7), which seals off an aperture in the hollow profile (1), through which a driver (31) of the mounting block (3), to which the measuring tape (2) is fixed, projects, and wherein the seal (7) surrounds the aperture and exerts on the mounting block (3) a force which urges the guide surfaces against mating surfaces of the undercuts (12, 13).

## Revendications

1. Dispositif de mesure de longueur pour la mesure de la position relative de deux objets (5, 50), comprenant un profilé creux (1) dans l'espace interne duquel un ruban de mesure (2) est tendu de manière à s'étendre dans la direction longitudinale (X),
un bloc de montage (3) étant à chaque fois prévu aux extrémités du ruban de mesure (2), au niveau duquel est fixé le ruban de mesure (2) et
un moyen étant prévu afin de positionner au moins l'un des blocs de montage (3) dans un premier état de montage de manière déplaçable sur le profilé creux (1) dans la direction longitudinale (X), **caractérisé en ce que**
le moyen est un moyen de réglage (4.1, 4.2, 4.3) supporté de manière déplaçable sur le profilé creux (1), qui peut être amené d'une première position dans une deuxième position, le bloc de montage (3), dans la première position du moyen de réglage (4.1, 4.2, 4.3), se trouvant dans le premier état de montage et le bloc de montage (3) pouvant être transféré, par déplacement du moyen de réglage (4.1, 4.2, 4.3) dans la deuxième position, dans un deuxième état de montage dans lequel le bloc de montage (3) est fixé sur le profilé creux (1) dans une position de consigne prédéfinie par le moyen de réglage (4.1, 4.2, 4.3),
le moyen de réglage (4.1) étant un corps supporté de manière rotative dans le profilé creux (1), dont la surface est réalisée de telle sorte que le bloc de montage (3) soit positionné, dans une première position de rotation de ce corps, dans le premier état de montage et que le bloc de montage (3) soit positionné, dans une deuxième position de rotation de ce corps, dans le deuxième état de montage, par le fait que le bloc de montage (3) est fixé au moyen d'une surface de ce corps dans la position de consigne.

2. Dispositif de mesure de longueur selon la revendication 1, dans lequel le corps rotatif présente une surface excentrique, avec laquelle le bloc de montage (3) peut être transféré par rotation du corps depuis le premier état de montage dans le deuxième état de montage.

3. Dispositif de mesure de longueur pour mesurer la position relative de deux objets (5, 50), comprenant un profilé creux (1) dans l'espace interne duquel un ruban de mesure (2) est tendu de manière à s'étendre dans la direction longitudinale (X),
un bloc de montage (3) étant à chaque fois prévu aux extrémités du ruban de mesure (2), au niveau duquel est fixé le ruban de mesure (2) et
un moyen étant prévu afin de positionner au moins l'un des blocs de montage (3) dans un premier état de montage de manière déplaçable sur le profilé creux (1) dans la direction longitudinale (X),
**caractérisé en ce que**
le moyen est un moyen de réglage (4.1, 4.2, 4.3) supporté de manière déplaçable sur le profilé creux (1), qui peut être amené d'une première position dans une deuxième position, le bloc de montage (3), dans la première position du moyen de réglage (4.1, 4.2, 4.3), se trouvant dans le premier état de montage et le bloc de montage (3) pouvant être transféré, par déplacement du moyen de réglage (4.1, 4.2, 4.3) dans la deuxième position, dans un deuxième état de montage dans lequel le bloc de montage (3) est fixé sur le profilé creux (1) dans une position de consigne prédéfinie par le moyen de réglage (4.1, 4.2, 4.3),
le moyen de réglage (4.2) étant un levier pouvant pivoter dans le profilé creux (1), et, par pivotement du levier, une butée du levier pouvant être amenée en contact avec une butée du bloc de montage (3), et le bloc de montage (3) pouvant être transféré dans le deuxième état de montage.

4. Dispositif de mesure de longueur pour mesurer la position relative de deux objets (5, 50), comprenant un profilé creux (1) dans l'espace interne duquel un ruban de mesure (2) est tendu de manière à s'étendre dans la direction longitudinale (X),
un bloc de montage (3) étant à chaque fois prévu aux extrémités du ruban de mesure (2), au niveau duquel est fixé le ruban de mesure (2) et
un moyen étant prévu afin de positionner au moins l'un des blocs de montage (3) dans un premier état de montage de manière déplaçable sur le profilé creux (1) dans la direction longitudinale (X), **caractérisé en ce que**
le moyen est un moyen de réglage (4.1, 4.2, 4.3) supporté de manière déplaçable sur le profilé creux (1), qui peut être amené d'une première position dans une deuxième position, le bloc de montage (3), dans la première position du moyen de réglage (4.1, 4.2, 4.3), se trouvant dans le premier état de montage et le bloc de montage (3) pouvant être transféré, par déplacement du moyen de réglage (4.1, 4.2, 4.3) dans la deuxième position, dans un deuxième état de montage dans lequel le bloc de montage (3) est fixé sur le profilé creux (1) dans une position de consigne prédéfinie par le moyen de réglage (4.1, 4.2, 4.3),
le moyen de réglage (4.3) étant un élément déplaçable dans le profilé creux (1), avec une dépouille qui est réalisée de telle sorte que le bloc de montage (3), dans une première position de cet élément, soit positionné dans le premier état de montage, et que le bloc de montage (3), dans une deuxième position de cet élément, soit positionné dans le deuxième état de montage, par le fait que le bloc de montage (3) peut être transféré au moyen de la dépouille dans le deuxième état de montage.

5. Dispositif de mesure de longueur selon l'une quelconque des revendications précédentes, dans lequel le point résultant d'application de force du ruban de mesure (2) au niveau du bloc de montage (3) ainsi que le point de contact (P) au niveau duquel le moyen de réglage (4.1, 4.2, 4.3) vient en contact avec le bloc de montage (3) dans le deuxième état de montage sont situés dans un plan (E) qui est orienté dans la direction longitudinale (X).

6. Dispositif de mesure de longueur selon l'une quelconque des revendications précédentes, dans lequel le bloc de montage (3) présente des surfaces de guidage qui s'engagent dans des contre-dépouilles (12, 13) du profilé creux (1) et qui positionnent le bloc de montage (3) dans celles-ci de manière déplaçable dans la direction longitudinale (X).

7. Dispositif de mesure de longueur selon la revendication 6, dans lequel les surfaces de guidage sont réalisées au niveau de saillies (35, 36) espacées les unes des autres dans la direction longitudinale (X) et tournées dans la direction longitudinale (X), dont chacune s'engage dans l'une des contre-dépouilles (12, 13) du profilé creux (1) .

8. Dispositif de mesure de longueur selon la revendication 5 et selon l'une quelconque des revendications 6 ou 7, dans lequel le centre de gravité des surfaces de guidage se situe dans le plan (E).

9. Dispositif de mesure de longueur selon l'une quelconque des revendications 6 à 8, dans lequel, entre le profilé creux (1) et le bloc de montage (3), est disposé un joint d'étanchéité élastique (7) qui étanchéifie un orifice du profilé creux (1) à travers lequel pénètre un dispositif d'entraînement (31) du bloc de montage (3), au niveau duquel est fixé le ruban de mesure (2), et dans lequel le joint d'étanchéité (7) entoure l'orifice et exerce une force sur le bloc de montage (3), laquelle pousse les surfaces de guidage contre des surfaces conjuguées -des contre-dépouilles (12, 13).
